# EUROPEAN PATENT SPECIFICATION

(11) **EP 1 649 717 B1**
(45) Date of publication and mention of the grant of the patent: **24.09.2014**
(21) Application number: 04779401.1
(22) Date of filing: 28.07.2004
(51) Int. Cl.: B01D 1/06, B01D 1/22, B01D 1/28, B01D 3/10, B01D 3/42, B01D 5/00, B01D 35/12, B01D 29/01, F04C 19/00, F04C 29/00

(54) **SYSTEMS AND METHODS FOR DISTRIBUTED UTILITIES**
SYSTEME UND VERFAHREN FÜR VERTEILTE VERSORGUNGSEINRICHTUNGEN
SYSTEMES ET PROCEDES POUR SERVICES PUBLICS REPARTIS

(30) Priority: 28.07.2003 US 490615 P; 10.11.2003 US 518782 P
(43) Date of publication of application: 26.04.2006
(73) Proprietor: DEKA PRODUCTS LIMITED PARTNERSHIP, Manchester, NH 03101-1108 (US)
(72) Inventor: KAMEN, Dean, Bedford, NH 03110 (US); DEMERS, Jason, A., Manchester, NH 03104 (US); OWENS, Kingston, Bedford, NH 03110 (US)
(74) Representative: Finnie, Peter John
(86) International application number: PCT/US2004/024335
(87) International publication number: WO 2005/013638

(56) References cited:
- EP-A- 1 202 594
- WO-A-03/056680
- US-A- 5 973 481

## Description

### Technical Field

The present invention relates to the field of distributed utilities, and, more particularly, to distributed water purification systems and distributed power.

### Background Art

In many developing countries and remote areas without power plants and water purification plants, access to electricity and safe drinking water is a significant need. Often in such areas, poor financial resources, limited technical assets, and low population density does not make it feasible to build power plants and water purification plants to provide these resources to the population. In such circumstances, the use of distributed utilities may provide a solution. Distributed water purification systems, such as described in US Provisional Application 60/425,820, and distributed electrical generators, such as diesel-powered internal combustion generators and generators based on the Stirling cycle, such as described in U. S. Patent No. 6,253,550, may be used to provide electricity and safe drinking water without the expense and delays associated with building and maintaining utility plants and the infrastructure required to bring the electricity and safe drinking water and to its point of use. With such the use of such distributed utilities, however, comes the need to appropriately distribute these utilities to the people who need them and to monitor the operation and correct usage of these systems.

### Summary of the Invention

In accordance with preferred embodiments of the present invention, a monitoring system for distributed utilities is provided. The monitoring system has a water purification device for converting available water to purified water. An input sensor is provided for measuring source water input to the water purification device, while an output sensor is provided for measuring consumption of purified water output from the water purification device. The monitoring system has a controller for concatenating measured source water input and consumption of purified water output on the basis of the input and output sensors.

The monitoring system has a self-locating device, such as a GPS receiver, having an output indicative of the location of the monitoring system. Characteristics of the measured input and output may therefore depend upon the location of the monitoring system.

The input sensor may be a flow rate monitor. The output sensor may be a water quality sensor including one or more of turpidity, conductivity, and temperature sensors.

The monitoring system may also have a telemetry module for communicating measured input and output parameters to a remote site, either directly or via an intermediary device such as a satellite, and, moreover, the system may include a remote actuator for varying operating parameters of the water purification device based on remotely received instructions. The monitoring system may also have a self-locating device, such as a GPS receiver, having an output indicative of the location of the monitoring system, In that case, characteristics of the measured input and output may depend upon the location of the monitoring system.

In accordance with further embodiments of the invention, a distributed network of utilities is provided. The distributed network has water purification devices for converting available water to purified water, each having a self-locating device having an output indicative of its location, input sensors for measuring inputs to respective water purification devices, output sensors for measuring consumption of output from respective water purification devices, and a telemetry transmitter for transmitting input and output parameters of a specified water purification device. Finally, the distributed network has a remote processor for receiving input and output parameters from a plurality of water purification devices.

In accordance with yet another embodiment of the invention, a method is provided for supplying distributed utilities. The method has steps of providing a water purification device to a user, monitoring at least one index of water purification device usage to supply a utility, charging the user on the basis of the index of water purification device usage, and determining the precise location of the water purification device using a self-locating device having an output indicative of the location of the water purification device.

In accordance with other aspects of the present invention, methods are provided for assembling monitoring systems that monitor input to, and consumption of output from, a water purification device. These methods include coupling sensors to a controller of the water purification device and providing a self-locating device for indicating the location of the monitoring sysetm, and, optionally, communica tion channels between the controller and a monitoring telemetry module.

### Brief Description of the Drawings

The foregoing features of the invention will be more readily understood by reference to the following detailed description, taken with reference to the accompanying drawings, in which:
Fig. 1 is a depiction of a monitoring system for distributed utilities in accordance with embodiments of the present invention; and
Fig. 2 is a depiction of a distribution system for utilities in accordance with embodiments of the present invention.

### Detailed Description of Specific Embodiments

### Monitoring

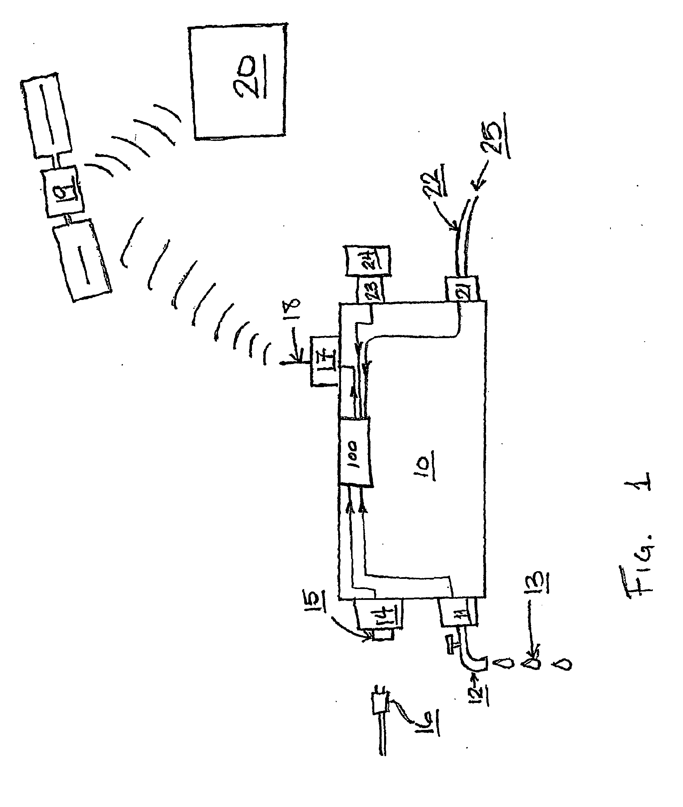

Referring first to Fig. 1, preferred embodiments of the present invention provide for monitoring generation device 10. Generation device 10 is a water purification device, which may be in combination with an electrical generator, or other utility generation device. Generation device 10 may typically be characterized by a set of parameters that describe its current operating status and conditions. Such parameters may include, without limitation, its temperature, its input or output flux, etc., and may be subject to monitoring by means of sensors, as described in detail below.

I n the case in which generation device 10 is a water purification device, source water enters the generation device 10 at inlet 22 and leaves the 25 generation device at outlet W IIe amount of source water 25 entering generation device 10 and the amount of purified water 13 leaving generation device 10 can be monitored through the use of one or more of a variety of sensors commonly used to determine flow rate, such as sensors for determining them temperature and pressure or a rotometer, located at inlet sensor module 21 and/or at outlet sensor module 11, either on a per event or cumulative basis. Additionally, the proper functioning of the generation device 10 can be determined by measuring the turpidity, conductivity, and/or temperature at the outlet sensor module 11 and/or the inlet sensor module 21, Other parameters,
such as system usage time or power consumption, either per event or cumulatively, can also be determined. A sensor can be coupled to an alarm or shut off switch that may be triggered when the sensor detects a value outside a pre-programmed range.

When the location of the system is known, either through direct input of the system location or by the use of a GPS location detector, additional water quality tests may be run based on location, including checks for known local water contaminates, utilizing a variety of detectors, such as antibody chip detectors or cell-based detectors. The water quality sensors may detect an amount of contaminates in water. The sensors can be programmed to sound an alarm if the water quality value rises above a pre-programmed water quality value. The water quality value is the measured amount of contaminates in the water. Alternatively, a shut off switch may turn off the generation device if the water quality value rises about a pre-programmed water quality value.

Further, scale build-up in the generation device 10, if any, can be determined by a variety of methods, including monitoring the heat transfer properties of the system or measuring the flow impedance. A variety of other sensors may be used to monitor a variety of other system parameters.

In the case in which generation device 10 is an electrical generator, in combination with a water purification device, fuel enters the generation device from a tank, pipe, or other means through fuel inlet 24. The amount of fuel consumed by generation device 10 can be determined through the use of a fuel sensor 23, such as a flow sensor. Excess electricity generated, in the case of a combined electrical generator and water purification device, can be accessed through electricity outlet 15. The amount of electricity used, either per event or cumulatively, may be determined by outlet sensor module 14. A variety of other sensors may be used to monitor a variety of other system parameters.

In either of the cases described above, input sensor modules 21 and 23 as well as output sensor modules 11 and 14 may be coupled to a controller 100, electrically or otherwise, in order to process, concatenate, store, or communicate the output values of the respective sensor modules as now described in the following section.

### Communications

The sensors described above may be used to monitor and/or record the various parameters described above onboard the generation device 10, or in an alternative embodiment of the present invention, the generation device 10 may be equipped with a communication system 17, such as a cellular communication system. The communication system 17 could be an internal system used solely for communication between the generation device 10 and the monitoring station 20. Alternatively, the communication system 17 could be a cellular communication system that includes a cellular telephone for general communication through a cellular satellite system 19. The communication system 17 may also employ wireless technology such as the Bluetooth® open specification. The communication system 17 may additionally include a GPS (Global Positioning System) locator.

Communication system 17 enables a variety of improvements to the generation device 10, by enabling communication with a monitoring station 20. For example, the monitoring station 20 may monitor the location of the generation device 10 to ensure that use in an intended location by an intended user. Additionally, the monitoring station 20 may monitor the amount of water and/or electricity produced, which may allow the calculation of usage charges. Additionally, the determination of the amount of water and possibly also electricity produced during a certain period or the cumulative hours of usage during a certain period, allows for the calculation of a preventative maintenance schedule.
If it is determined that a maintenance call is required, either by the calculation of usage or by the output of any of the sensors used to determine water quality, the monitoring station 20 can arrange for a maintenance visit. In the case that a GPS (Global Positioning System) locator is in use, monitoring station 20 can determine the precise location of the generation device 10 to better facilitate a maintenance visit. The monitoring station 20 can also determine which water quality or other tests are most appropriate for the present location of the generation device 10. The communication system 17 can also be used to turn the generation device 10 on or off, to pre-heat the device prior to use, or to deactivate the system in the event the system is relocated without advance warning, such as in the event of theft.

This information can be advantageously monitored through the use of a web-based utility monitoring system, such as those produced by Teletrol Systems, Inc. of Bedford, New Hampshire.

### Distribution

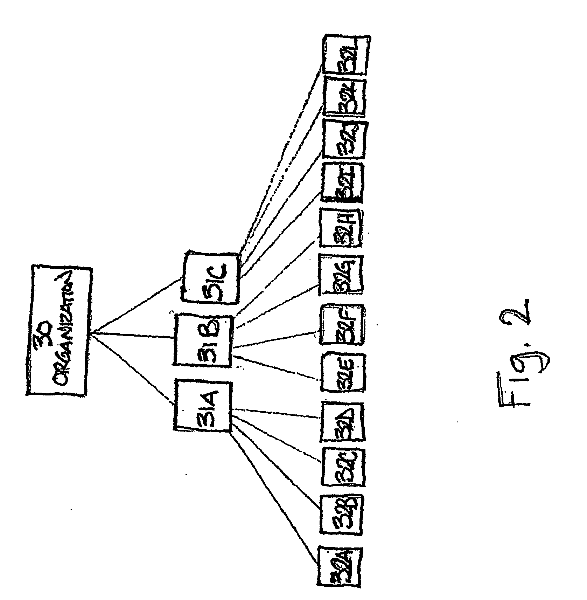

The use of the monitoring and communication system described above facilitates the use of a variety of utility distribution systems, For example, with reference to Figure 2, an organization 30, such as a Government agency, non-governmental agency (NGO), or privately funded relief organization, a corporation, or a combination of these, could provide distributed utilities, such as safe drinking water and possibly also electricity, to a geographical or political area, such as an entire country. The organization **30** can then establish local distributors **31A, 31B,** and **31C.** These local distributors could preferably be a monitoring station **20** described above. In one possible arrangement, organization 30 could provide some number of generation devices **10** to the local distributor **31A,** etc. In another possible arrangement, the organization **30** could sell, loan, or make other financial arrangements for the distribution of the generation devices **10.** The local distributor **31A,** etc. could then either give these generation devices to operators **32A, 32 B,** etc., or provide the generation devices **10** to the operators though some type of financial arrangement, such as a sale or micro-loan.

The operator **32** could then provide distributed utilities to a village center, school, hospital, or other group at or near the point of water access. In one preferred embodiment, when the generation device **10** is provided to the operator **32** by means of a micro-loan, the operator **32** could charge the end users on a per-unit bases, such as per watt hour in the case of electricity or per liter in the case of purified water. Either the local distributor **31** or the organization **30** may monitor usage and other parameters using one of the communication systems described above. The distributor **31** or the organization **30** could then recoup some of the cost of the generation device **10** or effect repayment of the micro-loan by charging the operator **32** for some portion of the per-unit charges, such as 50%. The communication systems described additionally can be used to deactivate the generation device **10** if the generation device is relocated outside of a preset area or if payments are not made in a timely manner. This type of a distribution system may allow the distribution of needed utilities across a significant area quickly, while then allowing for at least the partial recoupment of funds, which, for example, could then be used to develop a similar system in another area.

In view of the foregoing, it will therefore be understood that the scope of the invention as defined in the following claims is not limited to the embodiments described herein, and that the above and numerous additional variations and modifications could be made thereto without departing from the scope of the invention..

## Claims

1. A monitoring system for distributed utilities, the monitoring system comprising:
a. a water purification device (10) for converting available water (25) to purified water (13), the water purification device **characterised by** a plurality of operating parameters;
b. an input sensor (21) for measuring source water input to the water purification device;
c. an output sensor (11) for measuring consumption of purified water output from the water purification device;
d. a controller (100) for concatenating measured source water input and consumption of purified water output on the basis of the input and output sensors; and
e. a self-locating device having an output indicative of the location of the monitoring system.

2. A monitoring system according to claim 1, further comprising at least one sensor for measuring at least one parameter of the said plurality of operating parameters of the water purification device.

3. A monitoring system according to claim 1, wherein the at least one sensor is a heat transfer monitor.

4. A monitoring system according to claim 1, wherein the at least one sensor is a flow impedance monitor.

5. A monitoring system according to claim 1, wherein the input sensor is a flowrate monitor.

6. A monitoring system according to claim 1, wherein the output sensor includes a water quality sensor including at least one of a turpidity, conductivity, and temperature sensor.

7. A monitoring system according to claim 6, further comprising a shut off switch that automatically turns off said water purification device when said water quality sensor rises above a pre-programmed water quality value.

8. A monitoring system according to claim 6, further comprising an alarm that alerts a user when said water quality value rises above a pre-programmed water quality value.

9. A monitoring system according to claim 6, further comprising a remotely operable shut off switch.

10. A monitoring system according to claim 1, further comprising a telemetry module for communicating measured input and output parameters to a remote site.

11. A monitoring system according to claim 10, wherein the telemetry module is a cellular communications system.

12. A monitoring system according to claim 10, wherein the telemetry module is a wireless system.

13. A monitoring system according to claim 1, further including a remote actuator for varying operating parameters of the water purification device based on remotely received instructions.

14. A monitoring system according to claim 1, wherein the self-locating device is a global positioning sytem.

15. A monitoring system according to claim 1, wherein monitored characteristics of input and output depend upon the location of the monitoring system.

16. A method for assembling a monitoring system comprising:
a. providing a water purification device (110);
b. coupling an input sensor (21) for measuring source water input to the water purification device;
c. coupling an output sensor (11) for measuring consumption of purified water output from the water purification device;
d. coupling a controller (100) to the input and output sensors for concatenating measured source water input and consumption of purified water output on the basis of the input and output sensors; and
e. providing a self-locating device for indicating the location of the monitoring system.

17. The method of claim 16, further comprising:
a. providing communication between a telemetry module and said controller; and
b. providing communication between said telemetry module and a monitoring station.

18. A distributed network of utilities, comprising:
a. water purification devices (10) for converting available water to purified water, each having a self-locating device having an output indicative of the location of the water purification device (10).;
b. input sensors (21) for measuring inputs to respective water purification devices;
c. output sensors (11) for measuring consumption of output from respective water purification devices;
d. a telemetry transmitter for transmitting input and output parameters of specified water purification device; and
e. a remote processor for receiving input and output parameters from a plurality of water purification devices.

19. A method for providing distributed utilities, the method comprising:
a. providing a water purification device (10) to a user;
b. monitoring at least one index of water purification device usage to supply a utility; and
c. charging the user on the basis of the index of water purification device usage, the method further comprising determining the precise location of the water purification device (10) using a self-locating device having an output indicative of the location of the water purification device (10).

## Patentansprüche

1. Überwachungssystem für verteilte Versorgungseinrichtungen, wobei das Überwachungssystem Folgendes umfasst:
a. eine Wasserreinigungsvorrichtung (10) zur Umwandlung von verfügbarem Wasser (25) in Reinwasser (13), wobei die Wasserreinigungsvorrichtung durch mehrere Betriebsparameter gekennzeichnet ist;
b. einen Eingangssensor (21) zur Messung der Ursprungswasserzufuhr in die Wasserreinigungsvorrichtung;
c. einen Ausgangssensor (11) zur Messung des Verbrauchs von ausgegebenem Reinwasser aus der Wasserreinigungsvorrichtung;
d. einen Regler (100) zur Verknüpfung der gemessenen Ursprungswasserzufuhr mit dem Verbrauch von ausgegebenem Reinwasser, basierend auf dem Eingangs- und Ausgangssensor; und
e. eine Vorrichtung zur automatischen Standorterfassung mit einer Ausgabe, die den Standort des Überwachungssystems angibt.

2. Überwachungssystem gemäß Anspruch 1, ferner mindestens einen Sensor zur Messung von mindestens einem Parameter der mehreren Betriebsparameter der Wasserreinigungsvorrichtung umfassend.

3. Überwachungssystem gemäß Anspruch 1, wobei der mindestens eine Sensor ein Wärmeübertragungsmonitor ist.

4. Überwachungssystem gemäß Anspruch 1, wobei der mindestens eine Sensor ein Durchflussbehinderungsmonitor ist.

5. Überwachungssystem gemäß Anspruch 1, wobei der Eingangssensor ein Durchsatzmonitor ist.

6. Überwachungssystem gemäß Anspruch 1, wobei der Ausgangssensor einen Wasserqualitätssensor einschließt, der mindestens einen der folgenden Sensoren einschließt: Trübungs-, Leitfähigkeits- und Temperatursensor.

7. Überwachungssystem gemäß Anspruch 6, ferner einen Ausschalter umfassend, der automatisch die Wasserreinigungsvorrichtung ausschaltet, wenn der Wasserqualitätssensor über einen festgelegten Wasserqualitätswert steigt.

8. Überwachungssystem gemäß Anspruch 6, ferner einen Alarm umfassend, der einen Benutzer darauf aufmerksam macht, wenn der Wasserqualitätswert über einen festgelegten Wasserqualitätswert steigt.

9. Überwachungssystem gemäß Anspruch 6, ferner einen Ausschalter umfassend, der aus der Ferne betätigt werden kann.

10. Überwachungssystem gemäß Anspruch 1, ferner ein Telemetriemodul zur Mitteilung der gemessenen Eingangs- und Ausgangsparameter an einen entfernt gelegenen Standort umfassend.

11. Überwachungssystem gemäß Anspruch 10, wobei das Telemetriemodul ein zellulares Kommunikationssystem ist.

12. Überwachungssystem gemäß Anspruch 10, wobei das Telemetriemodul ein Drahtlossystem ist.

13. Überwachungssystem gemäß Anspruch 1, ferner ein Fernbedienelement zur Variierung von Betriebsparametern der Wasserreinigungsvorrichtung basierend auf aus der Ferne empfangenen Anweisungen umfassend.

14. Überwachungssystem gemäß Anspruch 1, wobei die Vorrichtung zur automatischen Standorterfassung ein Global Positioning System ist.

15. Überwachungssystem gemäß Anspruch 1, wobei die überwachten Merkmale des Eingangs und Ausgangs vom Standort des Überwachungssystems abhängig sind.

16. Verfahren für die Montage eines Überwachungssystems, umfassend:
a. Bereitstellen einer Wasserreinigungsvorrichtung (110);
b. Anschließen eines Eingangssensors (21) zur Messung der Ursprungswasserzufuhr in die Wasserreinigungsvorrichtung;
c. Anschließen eines Ausgangssensors (11) zur Messung des Verbrauchs von Reinwasser aus der Wasserreinigungsvorrichtung;
d. Anschließen eines Reglers (100) an den Eingangs- und Ausgangssensor zur Verknüpfung der gemessenen Ursprungswasserzufuhr mit dem Verbrauch von ausgegebenem Reinwasser, basierend auf dem Eingangs- und Ausgangssensor; und
e. Bereitstellen einer Vorrichtung zur automatischen Standorterfassung zur Anzeige des Standorts des Überwachungssystems.

17. Verfahren gemäß Anspruch 16, ferner umfassend:
a. Bereitstellen von Kommunikation zwischen einem Telemetriemodul und dem Regler; und
b. Bereitstellen von Kommunikation zwischen dem Telemetriemodul und einer Überwachungsstation.

18. Verteiltes Netzwerk von Versorgungseinrichtungen, umfassend:
a. Wasserreinigungsvorrichtungen (10) zur Umwandlung von verfügbarem Wasser in Reinwasser, die jeweils über eine Vorrichtung zur automatischen Standortverfassung mit einer Ausgabe, die den Standort der Wasserreinigungsvorrichtung (10) angibt, verfügen;
b. Eingangssensoren (21) zur Messung der Zufuhren der jeweiligen Wasserreinigungsvorrichtungen;
c. Ausgangssensoren (11) zur Messung des Verbrauchs des abgegebenen Wassers aus den jeweiligen Wasserreinigungsvorrichtungen;
d. einen Telemetriesender zum Senden von Eingangs und Ausgangsparametern der angegebenen Wasserreinigungsvorrichtung; und
e. einen entfernt angeordneten Prozessor zum Empfangen von Eingangs- und Ausgangsparametern von mehreren Wasserreingungsvorrichtungen.

19. Verfahren für die Bereitstellung verteilter Versorgungseinrichtungen, wobei das Verfahren umfasst:
a. Bereitstellen einer Wasserreinigungsvorrichtung (10) an einen Benutzer;
b. Überwachen von mindestens einem Gradmesser der Verwendung der Wasserreinigungsvorrichtung zur Versorgung einer Versorgungseinrichtung; und
c. Inrechnungstellen der Gebühren für den Benutzer, basierend auf dem Gradmesser der Verwendung der Wasserreinigungsvorrichtung, wobei das Verfahren ferner die Ermittlung des genauen Standorts der Wasserreinigungsvorrichtung (10) mithilfe einer Vorrichtung zur automatischen Standorterfassung umfasst, welche eine Ausgabe hat, die den Standort der Wasserreinigungsvorrichtung (10) angibt.

## Revendications

1. Système de surveillance pour des services publics répartis, ce système de surveillance comprenant :
a. un dispositif de purification d'eau (10) pour convertir l'eau disponible (25) en eau purifiée (13), ce dispositif de purification d'eau étant **caractérisé par** une pluralité de paramètres de fonctionnement ;
b. un capteur d'entrée (21) pour mesurer l'entrée d'eau source dans le dispositif de purification d'eau ;
c. un capteur de sortie (11) pour mesurer la consommation d'eau purifiée sortant du dispositif de purification d'eau ;
d. un contrôleur (100) pour enchaîner l'entrée d'eau source mesurée et la consommation d'eau purifiée sortante en se basant sur les capteurs d'entrée et de sortie ; et
e. un dispositif à auto-positionnement ayant une sortie indicatrice de l'emplacement du système de surveillance.

2. Système de surveillance selon la revendication 1, comprenant en outre au moins un capteur pour mesurer au moins un paramètre de ladite pluralité de paramètres de fonctionnement du dispositif de purification d'eau.

3. Système de surveillance selon la revendication 1, dans lequel au moins un capteur est un dispositif de surveillance de transfert de chaleur.

4. Système de surveillance selon la revendication 1, dans lequel au moins un capteur est un dispositif de surveillance d'impédance de débit.

5. Système de surveillance selon la revendication 1, dans lequel le capteur d'entrée est un dispositif de surveillance de débit.

6. Système de surveillance selon la revendication 1, dans lequel le capteur de sortie comprend un capteur de qualité de l'eau comprenant au moins un capteur de turbidité, un capteur de conductivité ou un capteur de température.

7. Système de surveillance selon la revendication 6, comprenant en outre un interrupteur de sectionnement qui sectionne automatiquement ledit dispositif de purification d'eau quand ledit capteur de qualité de l'eau s'élève au-dessus d'une valeur de qualité de l'eau pré-programmée.

8. Système de surveillance selon la revendication 6, comprenant en outre une alarme qui alerte un utilisateur lorsque ladite valeur de qualité de l'eau s'élève au-dessus d'une valeur de qualité de l'eau pré-programmée.

9. Système de surveillance selon la revendication 6, comprenant en outre un interrupteur de sectionnement pouvant être actionné à distance.

10. Système de surveillance selon la revendication 1, comprenant en outre un module de télémétrie pour communiquer les paramètres d'entrée et de sortie mesurés à un site éloigné.

11. Système de surveillance selon la revendication 10, dans lequel module de télémétrie est un système de communication cellulaire.

12. Système de surveillance selon la revendication 10, dans lequel module de télémétrie est un système sans fil.

13. Système de surveillance selon la revendication 1, comprenant en outre un actionneur à distance pour varier les paramètres de fonctionnement du dispositif de purification d'eau en se basant sur des instructions reçues à distance.

14. Système de surveillance selon la revendication 1, dans lequel dispositif à auto-positionnement est un système de positionnement mondial.

15. Système de surveillance selon la revendication 1, dans lequel les caractéristiques surveillées d'entrée et de sortie dépendent de l'emplacement du système de surveillance.

16. Procédé pour assembler un système de surveillance comprenant :
a. la fourniture d'un dispositif de purification d'eau (110) ;
b. le couplage d'un capteur d'entrée (21) pour mesurer l'entrée de l'eau source dans le dispositif de purification d'eau ;
c. le couplage d'un capteur de sortie (11) pour mesurer la consommation d'eau purifiée sortant du dispositif de purification d'eau ;
d. le couplage d'un contrôleur (100) aux capteurs d'entrée et de sortie pour enchaîner l'entrée d'eau source mesurée et la consommation d'eau purifiée sortante en se basant sur les capteurs d'entrée et de sortie ; et
e. la fourniture d'un dispositif à auto-positionnement pour indiquer l'emplacement du système de surveillance.

17. Procédé selon la revendication 16, comprenant en outre :
a. la fourniture d'une communication entre un module de télémétrie et ledit contrôleur ; et
b. la fourniture d'une communication entre ledit module de télémétrie et un poste de surveillance.

18. Système de surveillance de services publics répartis comprenant :
a. des dispositifs de purification d'eau (10) pour convertir l'eau disponible en eau purifiée, chacun ayant un dispositif à auto-positionnement ayant une sortie indicatrice de l'emplacement du dispositif de purification d'eau (10) ;
b. des capteurs d'entrée (21) pour mesurer les entrées dans les dispositifs de purification d'eau respectifs ;
c. des capteurs de sortie (11) pour mesurer la consommation de la sortie des dispositifs de purification d'eau respectifs ;
d. un transmetteur de télémétrie pour transmettre les paramètres d'entrée et de sortie du dispositif de purification d'eau spécifié ; et
e. un processeur à distance pour recevoir les paramètres d'entrée et de sortie venant d'une pluralité de dispositifs de purification d'eau.

19. Procédé pour fournir des services publics répartis, ce procédé comprenant :
a. la fourniture d'un dispositif de purification d'eau (10) à un utilisateur ;
b. la surveillance d'au moins un indice d'utilisation de dispositif de purification d'eau pour alimenter un service public ; et
c. la facturation de l'utilisateur en se basant sur l'indice d'utilisation du dispositif de purification d'eau, ce procédé comprenant en outre la détermination de l'emplacement précis du dispositif de purification d'eau (10) en utilisant un dispositif d'auto-positionnement ayant une sortie indicatrice de l'emplacement du dispositif de purification d'eau (10).
